(19)

Europäisches Patentamt

European Patent Office

Office européen des brevets

(11) **EP 4 036 813 A1**

(12) **EUROPEAN PATENT APPLICATION**

(43) Date of publication:
**03.08.2022 Bulletin 2022/31**

(21) Application number: **21212460.6**

(22) Date of filing: **06.12.2021**

(51) International Patent Classification (IPC):
*G06N 5/00* (2006.01)     *G06N 3/12* (2006.01)
*G06N 3/00* (2006.01)

(52) Cooperative Patent Classification (CPC):
**G06N 5/003; G06N 3/126;** G06N 3/006

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.02.2021  JP 2021015149**

(71) Applicant: **FUJITSU LIMITED**
**Kawasaki-shi, Kanagawa 211-8588 (JP)**

(72) Inventor: **Shimada, Daichi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **OPTIMIZATION APPARATUS, OPTIMIZATION METHOD, AND OPTIMIZATION PROGRAM**

(57)     An apparatus includes a memory and one or more processors coupled to the memory and configured to perform performing an annealing-based solution search for each of a plurality of single-objective functions so as to obtain first solutions produced by the solution search, the plurality of single-objective functions being each generated by adding together a plurality of objective functions after weighting the objective functions with a corresponding one of a plurality of weighting patterns, and obtaining pareto solutions or approximate solutions thereof by performing a multipoint search from an initial state comprised of at least part of the first solutions, the multi-point search being performed such that solutions including at least non-dominated solutions of the objective functions are selected from a plurality of second solutions present in any given one of iterations of the multi-point search, and then the selected solutions are retained for a next one of the iterations.

FIG.1

**Description**

FIELD

The disclosures herein relate to an optimization apparatus, an optimization method, and an optimization program.

BACKGROUND

In real-world optimization problems encountered by a user, an optimal solution is not determined solely based on a particular user need, i.e., a particular evaluation metric. It generally becomes necessary to determine the best solution for the user based on the trade-offs between multiple evaluation metrics. For example, when a certain task is to be performed, it is not possible to satisfy both the need to shorten the work time and the need to reduce the cost of work simultaneously in an optimum manner. What is desired is to obtain a solution that satisfies competing needs. The multi-objective optimization problem is defined as the problem of minimizing multiple objective functions that formulate respective needs, under given constraints.

The multi-objective optimization problem does not have a solution that minimizes all the objective functions. Rather than presenting one optimal solution as an outcome to a user, a plurality of solutions are presented as outcomes to the user whereby the values of the multiple objective functions become small such as to provide overall satisfaction. The user determines the degree to which the plurality of needs are satisfied by taking into account all relevant factors, thereby selecting the best solution for himself/herself from the plurality of presented solutions.

The plurality of solutions presented as outcomes to the user are preferably a diverse set of solutions having an unbiased distribution with respect to the plurality of needs. Namely, it is preferable that one or more solutions having a satisfactory value for at least one objective function are obtained with respect to each of the plurality of needs, i.e., each of the plurality of objective functions. Also, such multiple solutions are preferably generated in an efficient manner in a short time.

Accordingly, it may be desired to provide a mechanism that can efficiently generate a diverse set of solutions for a multi-objective optimization problem.

[Related-Art Documents]

[Patent Document]

[Patent Document 1] Japanese Laid-Open Patent Publication No. 2002-302257
[Patent Document 2] Japanese Laid-Open Patent Publication No. H11-143938

SUMMARY

According to an aspect of the embodiment, an optimization apparatus includes a memory and one or more processors coupled to the memory and configured to perform performing an annealing-based solution search for each of a plurality of single-objective functions so as to obtain first solutions produced by the solution search, the plurality of single-objective functions being each generated by a process of generating a single-objective function by adding together a plurality of objective functions after weighting the objective functions with a corresponding one of a plurality of weighting patterns, and obtaining pareto solutions or approximate solutions thereof by performing a multi-point search from an initial state that is comprised of at least part of the first solutions, the multi-point search being performed such that solutions including at least non-dominated solutions of the plurality of objective functions are selected from a plurality of second solutions present in any given one of iterations of the multi-point search, and then the selected solutions are retained for a next one of the iterations.

BRIEF DESCRIPTION OF DRAWINGS

Fig. 1 is a drawing illustrating an example of the hardware configuration of an optimization apparatus;
Fig. 2 is a drawing illustrating an example of the functional configuration of the optimization apparatus;
Fig. 3 is a flowchart illustrating an example of the procedure of an optimization method;

Fig. 4 is a drawing schematically illustrating solutions obtained by performing optimization processes that minimize a plurality of single-objective functions;

Fig. 5 is a drawing illustrating an example of a temperature change pattern in simulated annealing;

Fig. 6 is a drawing illustrating another example of a temperature change pattern in simulated annealing;

Fig. 7 is a drawing illustrating yet another example of a temperature change pattern in simulated annealing;

Fig. 8 is a drawing schematically illustrating a distribution of initial solutions;

Fig. 9 is a drawing schematically illustrating changes in the distribution of solutions obtained by a multi-point search;

Fig. 10 is a flowchart illustrating the detail of the processes performed in steps S10 and S11 illustrated in Fig. 3;

Fig. 11 is a diagram schematically illustrating how solutions are gradually optimized by retaining solutions having high pareto ranks for next generations;

Fig. 12 is a drawing schematically illustrating an example of termination conditions for multi-point search; and

Fig. 13 is a drawing schematically illustrating another example of termination conditions for multi-point search.

DESCRIPTION OF EMBODIMENTS

In the following, embodiments of the invention will be described with reference to the accompanying drawings.

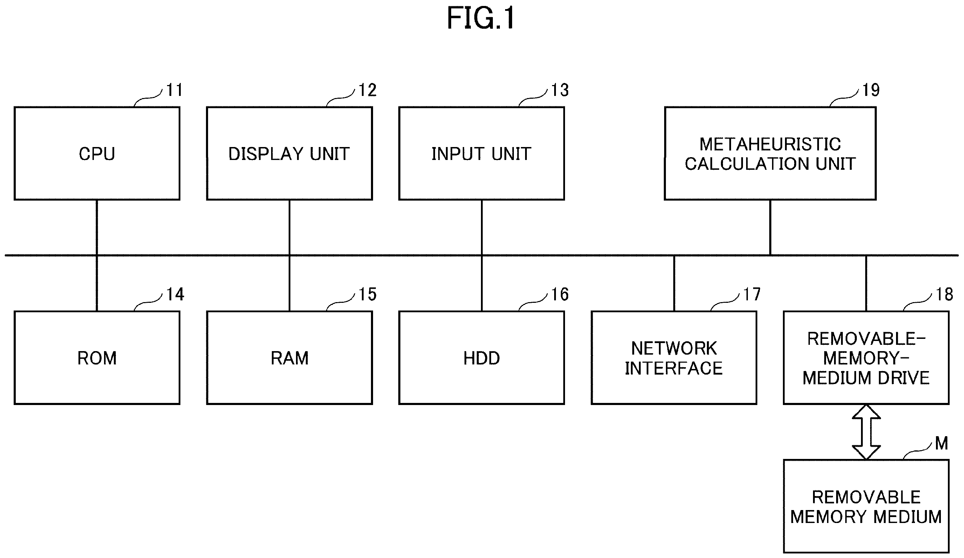

Fig. 1 is a drawing illustrating an example of the hardware configuration of an optimization apparatus. The optimization apparatus illustrated in Fig. 1 includes a CPU 11, a display unit 12, an input unit 13, a ROM 14, a RAM 15, an HDD 16, a network interface 17, a removable-memory-medium drive 18, and a metaheuristic calculation unit 19.

The input unit 13 provides user interface, and receives various commands for operating the optimization apparatus and user responses responding to data requests or the like. The display unit 12 displays the results of processing by the optimization apparatus, and further displays various data that make it possible for a user to communicate with the optimization apparatus. The network interface 17 is used to communicates with peripheral devices and with remote locations.

The optimization apparatus illustrated in Fig. 1 is a computer, and the optimization method is provided as a computer program executable by the optimization apparatus. This computer program is stored in a memory medium M that is mountable to the removable-memory-medium drive 18. The computer program is loaded to the RAM 15 or to the HDD 16 from the memory medium M through the removable-memory-medium drive 18. Alternatively, the computer program may be stored in a memory medium (not shown) provided in a peripheral apparatus or at a remote location, and is loaded to the RAM 15 or to the HDD 16 from the memory medium through the network interface 17.

Upon receiving user instruction for program execution from the input unit 13, the CPU 11 loads the program to the RAM 15 from the memory medium M, the peripheral apparatus, the remote memory medium, or the HDD 16. The CPU 11 executes the program loaded to the RAM 15 by use of an available memory space of the RAM 15 as a work area, and continues processing while communicating with the user as such a need arises. The ROM 14 stores control programs for the purpose of controlling basic operations of the CPU 48 or the like. By executing the computer program as described above, the optimization apparatus performs the function to obtain a plurality of solutions to a multi-objective optimization problem.

The metaheuristic calculation unit 19 is a dedicated hardware specifically designed to execute a metaheuristic algorithm. The metaheuristic calculation unit 19 may include an Ising machine that performs a solution search by annealing, for example, with respect to an Ising problem or the like. The metaheuristic calculation unit 19 may also include dedicated hardware for performing a multi-point search method such as a genetic algorithm. The metaheuristic calculation unit 19 may include both annealing hardware such as an Ising machine for performing annealing, and multi-point search hardware for performing a multi-point search method, or may include only one of these. In an alternative configuration, the metaheuristic calculation unit 19 implemented as dedicated hardware may not be provided. In such a case, the CPU 11, which is the processor of the general-purpose computer, functions as a metaheuristic calculation unit to perform a metaheuristic algorithm.

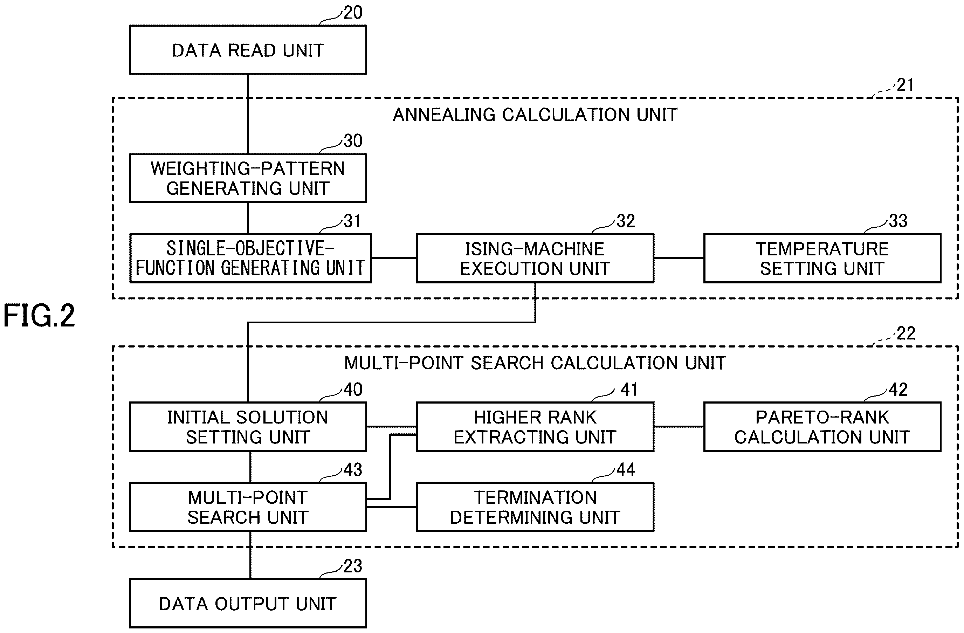

Fig. 2 is a drawing illustrating an example of the functional configuration of an optimization apparatus; The optimization apparatus illustrated in Fig. 2 includes a data read unit 20, an annealing calculation unit 21, a multi-point search calculation unit 22, and a data output unit 23. The annealing calculation unit 21 includes a weighting-pattern generating unit 30, a single-objective-function generation unit 31, an Ising-machine execution unit 32, and a temperature setting unit 33. The multi-point search calculation unit 22 includes an initial solution setting unit 40, a higher rank extracting unit 41, a pareto-rank calculation unit 42, a multi-point search unit 43, and a termination determining unit 44.

The data read unit 20 and the data output unit 23 may be implemented by the CPU 11 illustrated in Fig. 1. The functional units noted as the annealing calculation unit 21 and the multi-point search calculation unit 22 may be implemented by the CPU 11 or the metaheuristic calculation unit 19.

It may be noted that boundaries between functional blocks illustrated as boxes indicate functional boundaries, and may not necessarily correspond to boundaries between program modules or separation in terms of control logic. One functional block and another functional block may be combined into one functional block that functions as one block.

One functional block may be divided into a plurality of functional blocks that operate in coordination.

The data read unit 20 reads data defining a formulated multi-objective optimization problem from an external source via the input unit 13, the network interface 17, or the removable-memory-medium drive 18. The data read from an external source or data stored in the HDD 16 after being read from an external source is loaded by the data read unit 20 to the RAM 15 when solving a multi-objective optimization problem. The data defining a multi-objective optimization problem may include expressions in the QUBO (quadratic unconstrained binary optimization) format defining respective objective functions, expressions in the QUBO format defining constraints, and the like.

The variables that formulate a problem may be, for example, the following column vector.

$$x=(x_1, \ x_2, \ x_3, \ \dots, \ x_n)^T \qquad (1)$$

Here, T represents transposition. $x_1$, $x_2$, $x_3$, ..., $x_n$ are design variables, and assumes either a value of 0 or a value of 1. An objective function $f_i(x)$ (i: positive integer greater than or equal to 1 and less than or equal to N) is the i-th function of the N functions $f_1(x)$ to $f_N(x)$ (N: positive integer) that are to be minimized in optimization calculation, and may be expressed by the following equation.

$$E=x^T A x \qquad (2)$$

Here, A is the i-th matrix corresponding to the i-th objective function $f_i(x)$, and is a two-dimensional matrix of $n \times n$ elements. This expression (2) is equivalent to an expression representing an Ising model, and corresponds to the QUBO expression obtained by replacing variables having a value of -1 or 1 in the Ising model with variables having a value of 0 or 1.

Constraints may be defined by equations in terms of x. Specifically, a predetermined condition may be specified with respect to the value of an expression in terms of $x_1$, $x_2$, $x_3$, ..., $x_n$. For example, a condition requiring that the value of an expression is equal to zero or a condition requiring that the value of an expression is less than a predetermined value may be specified.

The annealing calculation unit 21 performs an optimization process by annealing, such as simulated annealing or quantum annealing, with respect to a multi-objective optimization problem. The description of an embodiment in the following uses an example in which an optimization process is performed by simulated annealing, for the purpose of explaining a process performed by the annealing calculation unit 21.

In performing an optimization process, the annealing calculation unit 21 changes a weighting pattern with respect to a single function obtained by adding together a plurality of objective functions after weighting with parameters, thereby generating a plurality of single functions having different weighting patterns. The single function is a composite function that includes a plurality of objective functions. The annealing calculation unit 21 performs an annealing-based optimization process to obtain one optimal solution for each of the plurality of single functions generated in the manner noted above, and also obtains a plurality of intermediate solutions present on the way to each optimal solution. In the present application, the optimal solution obtained by the annealing calculation unit 21 is not strictly the true optimal solution, but the best solution found by annealing.

A single function can be expressed as follows.

$$\sum w_i f_i(x) \qquad (3)$$

Here, the sum symbol $\sum$ calculates a sum over a range of i from 1 to N. Further, $w_i$ is a weighting factor for the objective function $f_i(x)$.

A weighting pattern emphasizing one or more objective functions among the multiple objective functions $f_1(x)$ to $f_N(x)$ (i.e., a weighting pattern in which wi for each of the one or more objective functions is given a relatively large value) is used to generate a single function that emphasizes one or more particular objective functions. An annealing-based optimization process is then performed to obtain an optimal solution for the single function generated in the manner noted above and to obtain a plurality of intermediate solutions present on the way to the optimal solution. By successively changing the weighting pattern, the one or more objective functions to be emphasized are successively changed, thereby producing a plurality of different single functions. The annealing calculation unit 21 performs an annealing-based optimization process to obtain an optimal solution and a plurality of intermediate solutions present on the way to the optimal solution with respect to each and every one of the plurality of generated single functions. By setting different weighting patterns appropriately, optimal solutions obtained in this manner are comprised of solutions having an unbiased distribution over the plurality of needs, i.e., solutions for each of which at least one objective function has a satisfactory value such that any given one of the plurality of objectives functions has a satisfactory value in at least one of the solutions.

However, optimal solutions obtained by annealing as described above are the optimal solutions for which an emphasis is placed on one or more specific objective functions, and, thus, may not be sufficiently diverse. Improving diversity may require that optimal solutions be obtained with respect to a large number of different weighting patterns. However, a method of properly setting weighting factors is difficult to design. Further, efficient processing is difficult to achieve when annealing is performed with respect to a large number of weighting patterns that correspond in number to the number of combinations of objective functions. Accordingly, the optimization apparatus illustrated in Fig. 2 is configured such that solution search is performed by using a multi-point search method based on a plurality of intermediate solutions present on the way to the optimal solution obtained by annealing.

The multi-point search calculation unit 22 performs a multi-point search from an initial state that is comprised of at least a part of the plurality of intermediate solutions, and selects solutions including at least non-dominated solutions of the plurality of objective functions from a plurality of solutions present in a certain stage of the multi-point search iterations, followed by leaving the selected solutions to remain for the next stage. With this arrangement, the multi-point search calculation unit 22 obtains pareto solutions of the plurality of objective functions or approximate solutions thereof. The multi-point search method used here refers to a method that derives a target solution by repeatedly performing the process which generates a plurality of solutions and then preferentially selects preferred solutions therefrom, followed by generating next solutions by using the selected solutions. Examples of multi-point search methods include a genetic algorithm, a scatter search method, and an ant-colony method. The description of the embodiment in the following uses a genetic algorithm as an example for the purpose of explaining a process performed by multi-point search calculation unit 22.

The non-dominated solution and the pareto solution are defined by the dominance relationship between solutions in a multi-objective optimization problem. In a feasible region (i.e., the region that satisfies constraints), x' is superior to x (i.e., x' dominates x) by definition when x' is equal or superior to x (i.e., having a smaller objective function value) with respect to all the objective functions, and x' is superior to x with respect to at least one objective function. The non-dominated solution refers to a solution that does not have a solution superior thereto in a set of solutions of interest. In mathematical terms, the non-dominated solution is a solution x* for which there is no dominating solution x' that satisfies the following.

$$f_i(x') \leq f_i(x\star) \ \forall i \qquad (4)$$

$$f_i(x') < f_i(x\star) \ \exists i \qquad (5)$$

The pareto solution is defined as the non-dominated solution in the set of all solutions present in the feasible region. In other words, the pareto solutions are a plurality of best solutions in a multi-objective optimization problem, and non-dominated solutions are a plurality of best solutions in a particular set of solutions. The plane formed by a set of non-dominated solutions is called a non-dominated front. The plane formed by a set of pareto resolutions is called a pareto front.

The multi-point search calculation unit 22 uses a plurality of intermediate solutions on the way to the optimal solution determined by the annealing calculation unit 21 as the initial state, thereby generating next generation solutions by performing a genetic algorithm, for example. The multi-point search calculation unit 22 repeatedly performs the process that preferentially selects a plurality of non-dominated solutions (i.e., preferred solutions) among the next generation solutions, and that generates a plurality of solutions for the next following generation by utilizing the selected solutions. With this arrangement, a multi-point search is performed from a start point that is comprised of relatively favorable intermediate solutions distributed around each optimal solution, thereby generating solutions evenly without any focus on a particular objective function. As a result, the non-dominated solution front of the plurality of objective functions gradually approaches the pareto front. The pareto solutions or approximate solutions thereof obtained by the multi-point search calculation unit 22 in the manner described above and the optimal solutions obtained by the annealing calculation unit 21 are output as final solutions. This arrangement enables the obtainment of a diverse set of solutions having an unbiased distribution over the plurality of needs, i.e., solutions for each of which at least one objective function has a satisfactory value such that any given one of the plurality of objectives functions has a satisfactory value in at least one of the solutions.

As described above, the optimal solutions generated by the annealing calculation unit 21 may not be used for obtaining next generation solutions by the multi-point search calculation unit 22. These optimal solutions are used to determine whether or not the multi-point search is terminated in the multi-point search calculation unit 22. That is, the multi-point search calculation unit 22 makes a termination condition check for the multi-point search based on a comparison of the solutions obtained by the multi-point search with the optimal solutions. With this arrangement, the multi-point search calculation unit 22 can determine whether the non-dominated solution front has sufficiently approached the optimal solutions, i.e., whether the non-dominated solution front has sufficiently approached the pareto front. Based on such a determination, the operation to obtain solutions can be terminated. This arrangement enables the obtainment of solutions for each of which at least one objective function has a sufficiently satisfactory value close to an optimal solution such that any given one of the plurality of objectives functions has such a satisfactory value in at least one of the solutions.

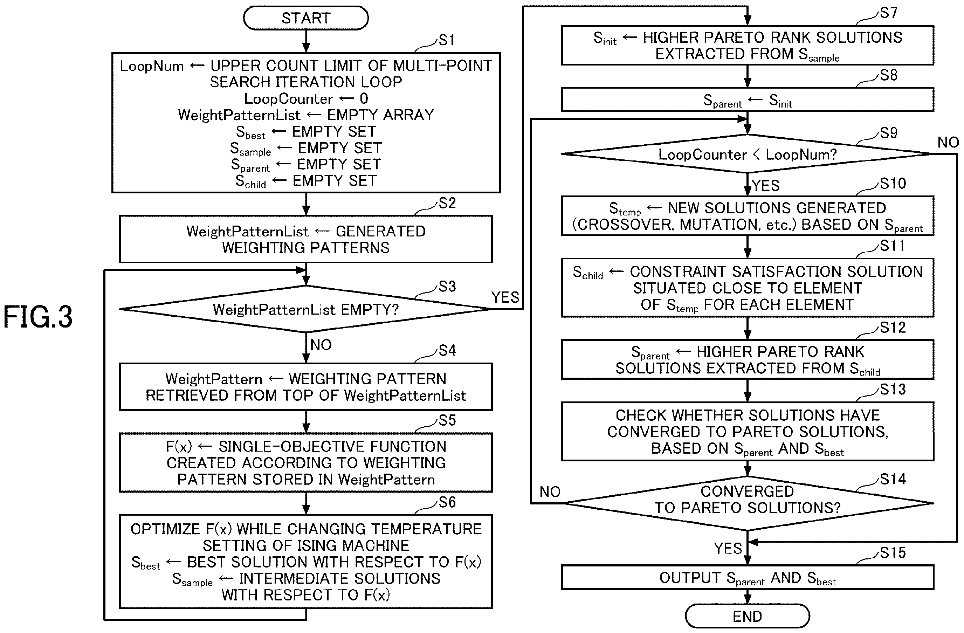

Fig. 3 is a flowchart illustrating an example of the procedure of an optimization method. The optimization apparatus illustrated in Fig. 2 performs the optimization method illustrated in Fig. 3.

It may be noted that, in Fig. 3 and the subsequent flowcharts, an order in which the steps illustrated in the flowchart are performed is only an example. The scope of the disclosed technology is not limited to the disclosed order. For example, a description may explain that an A step is performed before a B step is performed. Despite such a description, it may be physically and logically possible to perform the B step before the A step while it is possible to perform the A step before the B step. In such a case, all the consequences that affect the outcomes of the flowchart may be the same regardless of which step is performed first. It then follows that, for the purposes of the disclosed technology, it is apparent that the B step can be performed before the A step is performed. Despite the explanation that the A step is performed before the B step, such a description is not intended to place the obvious case as described above outside the scope of the disclosed technology. Such an obvious case inevitably falls within the scope of the technology intended by this disclosure.

In step S1, various initial values are set. For example, the annealing calculation unit 21 sets a weighting pattern list WeightPatternList to an empty array for initialization, and prepares empty sets to be used as an optimal solution set $S_{best}$ and an intermediate solution set $S_{sample}$. Moreover, the multi-point search calculation unit 22 sets an upper count limit of the multi-point search iteration loop to LoopNum, and sets an initial value zero to a count value LoopCounter indicative of the iteration count. The iteration count limit may be, for example, a number read from an external source by the data read unit 20 or a number that has been determined in advance. The multi-point search calculation unit 22 further prepares empty sets to be used as a parent set $S_{parent}$ and a child set $S_{child}$.

In step S2, the weighting-pattern generating unit 30 of the annealing calculation unit 21 generates a plurality of weighting patterns, and stores the generated weighting patterns in WeightPatternList. The weighting-pattern generating unit 30 may, for example, select one objective function from the plurality of objective functions, and generates a weighting pattern in which the weight for this objective function is set to a non-zero value (e.g., 1) and the weights for the other objective functions are set to zero. The weighting-pattern generating unit 30 may perform this process with respect to all the plurality of N objective functions to generate N weighting patterns. Alternatively, the weighting-pattern generating unit 30 may, for example, select two objective functions from the plurality of objective functions, and generates a weighting pattern in which the weights for these two objective functions are set to a non-zero value (e.g., 1) and the weights for the other objective functions are set to zero. The weighting-pattern generating unit 30 may perform this process with respect to all the pairs selectable from the plurality of objective functions to generate N(N/1)/2 weighting patterns.

In step S3, the single-objective-function generation unit 31 of the annealing calculation unit 21 determines whether or not WeightPatternList is empty. Upon finding that the list is not empty, i.e., when there is a weighting pattern for which annealing is to be performed, the process proceeds to step S4.

In step S4, the single-objective-function generation unit 31 retrieves a weighting pattern stored at the top of WeightPatternList. As a result, this weighting pattern is removed from WeightPatternList. The single-objective-function generation unit 31 stores the retrieved weighting pattern in WeightPattern.

In step S5, the single-objective-function generation unit 31 creates a single-objective function according to the weighting pattern stored in WeightPattern, followed by denoting the created single-objective function as F(x). As an example, the weighting pattern may the pattern in which, after one objective function $f_1(x)$ is selected from the plurality of objective functions, the weight for this objective function is set to 1, and the weights for the other objective functions are set to zero. In this case, the created single-objective function is simply $f_1(x)$. As another example, the weighting pattern may be the pattern in which, after two objective functions $f_1(x)$ and $f_2(x)$ are selected from the plurality of objective functions, the weights for these two objective functions are set to 1, and the weights for the other objective functions are set to zero. In this case, the created single-objective function is $f_1(x)+f_2(x)$.

In step S6, the Ising-machine execution unit 32 of the annealing calculation unit 21 performs an optimization process by simulated annealing with respect to the single-objective function F(x) while changing temperature settings. The Ising-machine execution unit 32 adds an optimal solution obtained by the optimization process to the optimal solution set $S_{best}$. The Ising-machine execution unit 32 adds intermediate solutions obtained on the way to the optimal solution to the intermediate solution set $S_{sample}$. All of these optimal and intermediate solutions are solutions that satisfy the given constraints.

In simulated annealing, the variable column vector x previously described may be used to represent a single state. An objective function value E of the current state is calculated, and, then, an objective function value E' of the next state obtained by making a slight change (e.g., 1-bit inversion) from the current state is calculated, followed by calculating a difference $\Delta E$ (= E'-E) between these two states. In the case in which the Boltzmann distribution is used to represent the probability distribution of x and the Metropolis method is used, for example, probability P with which a transition to the next state occurs may be defined by the following formula.

$$P = \min[1, \exp(-\beta\Delta E)] \qquad (6)$$

Here, $\beta$ is thermodynamic beta (i.e., the reciprocal of absolute temperature). The function min[1, x] assumes a value of 1 or a value of x, whichever is smaller. According to the above formula, a transition to the next state occurs with probability "1" in the case of $\Delta E \leqq 0$, and a transition to the next state occurs with probability $\exp(-\beta\Delta E)$ in the case of $0 < \Delta E$. It may be noted that in order to change temperature settings as previously noted, the thermodynamic beta $\beta$ may be changed.

Lowering temperature at a sufficiently slow rate, while performing state transitions, allows the state to be converged, theoretically, on an optimum solution having the smallest objective function value. The Metropolis method is a non-limiting example, and other transition control algorithms such as Gibbs sampling may alternatively be used.

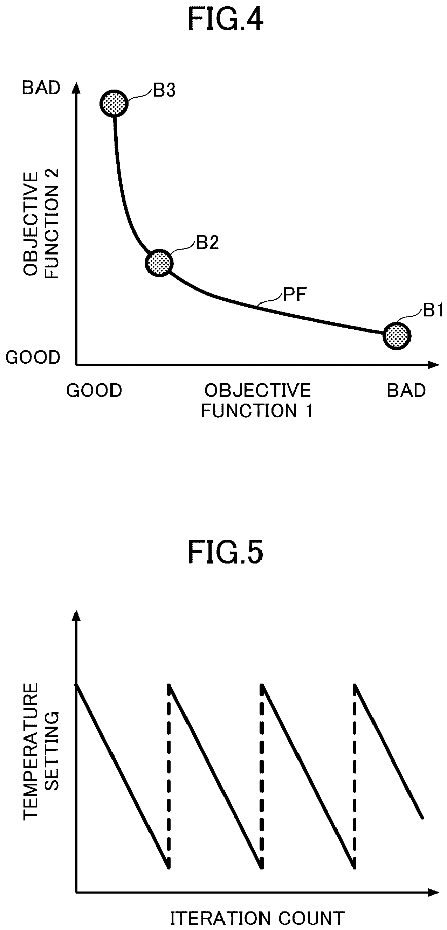

Fig. 4 is a drawing schematically illustrating solutions obtained by performing optimization processes that minimize a plurality of single-objective functions. In Fig. 4, the value of the first objective function $f_1(x)$ is represented by the horizontal axis, and the value of the second objective function $f_2(x)$ is represented by the vertical axis. FIG. 4 may be construed as a diagram illustrating a case in which there are only two objective functions, or may be construed as a diagram illustrating only the coordinate axes for two objective functions of interest in a multi-objective optimization problem defined by three or more objective functions.

When the single-objective function is $f_1(x)$, a solution B1 is obtained by annealing. When the single-objective function is $f_2(x)$, a solution B3 is obtained by annealing. When the single-objective function is $f_1(x)+f_2(x)$, a solution B2 is obtained by annealing. The solution B1 is the one which is obtained upon performing optimization by focusing only on the objective function $f_1(x)$. The solution B3 is the one which is obtained upon performing optimization by focusing only on the objective function $f_2(x)$. The solution B2 is the one which is obtained upon performing optimization by focusing only on the objective functions $f_1(x)$ and $f_2(x)$ evenly.

By selecting one objective function from the plurality of objective functions and setting only the weight for this objective function to a non-zero value, an optimal solution may be obtained in which only this objective function is focused on. Executing this process for each of all the objective functions allows an optimal solution to be obtained for a respective one of these objective functions and to be obtained such that only the respective objective function is focused on. This arrangement thus facilitates easy generation of optimal solutions each corresponding to a respective objective function among a diverse set of solutions desired in a multi-objective optimization problem.

By selecting two objective functions as a pair from the plurality of objective functions and setting only the weights for these two objective functions to a non-zero value, an optimal solution may be obtained that is situated at a middle position between the two optimal solutions each obtained by focusing separately on a respective one of these two objective functions. Executing this process for each pair selectable from the plurality of objective functions allows an optimal solution to be obtained for a respective one of the pairs selectable from the plurality of objective functions, and to be situated at the middle position between the two positions corresponding to the two objective functions constituting the respective pair. This arrangement thus facilitates easy generation of optimal solutions (e.g., B2) each situated between the two positions corresponding to two objective functions among a diverse set of solutions desired in a multi-objective optimization problem.

A curve PF which smoothly connects the solutions B1, B2 and B3 is a line that approximately matches the pareto front. The above-noted arrangement facilitates generation of optimal solutions located on or near the pareto front. However, it is preferable to further obtain solutions located on or near the pareto front between the solutions B1 and B2 and between the solutions B2 and B3, in order to add diversity to the solutions. In the optimization process illustrated in Fig. 3, a multi-point search method is performed based on the intermediate solutions in the subsequent steps, thereby facilitating simultaneous generation of a diverse set of solutions.

When the optimization process is performed by simulated annealing to obtain the intermediate solutions, temperature settings are changed as appropriate as previously described. Specifically, the temperature setting unit 33 of the annealing calculation unit 21 may set a temperature change pattern, so that the Ising-machine execution unit 32 may perform simulated annealing in accordance with this temperature change pattern. Obtaining a plurality of intermediate solutions while changing the temperature setting in simulated annealing as described above allows intermediate solutions to be obtained for various different temperature conditions, thereby guaranteeing the diversity of intermediate solutions.

Fig. 5 is a drawing illustrating an example of a temperature change pattern in simulated annealing. In Fig. 5, the horizontal axis represents the number of iterations in simulated annealing, and the vertical axis represents the temperature setting. In the example of the temperature change pattern illustrated in Fig. 5, temperature is continuously decreased from the maximum temperature, and is returned to the maximum temperature upon reaching a predetermined minimum temperature, followed by being continuously decreased from the maximum temperature again and again. In the case in which this temperature change pattern is used, a solution having the lowest single-objective function value may be selected as an optimal solution among the plurality of solutions obtained at the minimum temperature that occurs multiple times. The timing for obtaining an optimal solution is not limited to this arrangement. For example, the solution obtained at the last minimum temperature may be used as an optimal solution. A solution obtained each time a predetermined number of iterations (e.g., 1000 iterations) are performed may be used as an intermediate solution. It is preferable that solutions obtained at relatively low temperatures be used as intermediate solutions, but this is not a limiting example.

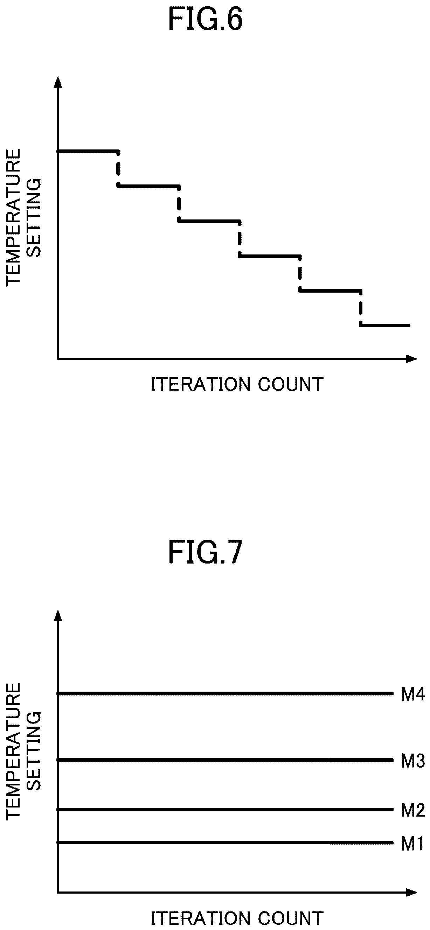

Fig. 6 is a drawing illustrating another example of a temperature change pattern in simulated annealing. In this example of a temperature change pattern illustrated in Fig. 6, temperature is lowered in a stepwise manner from the maximum temperature. In the case in which this temperature change pattern is used, a solution obtained at the last iteration may be selected as an optimal solution. A solution obtained each time a predetermined number of iterations (e.g., 1000 iterations) are performed may be used as an intermediate solution.

Fig. 7 is a drawing illustrating yet another example of a temperature change pattern in simulated annealing. In this example of a temperature change pattern illustrated in Fig. 7, a plurality of Ising machines M1-M4, each of which performs simulated annealing, are provided, and are driven at their respective temperatures. Each Ising machine operates at a fixed temperature, but simulated annealing at different temperature conditions are achieved by the plurality of Ising machines, which thus achieves conditions equivalent to temperature changes. It may be noted that temperature settings may be switched over between the Ising machines M1 to M4 each time a predetermined number of iterations are performed, for example, thereby causing each Ising machine to experience temperature changes in a stepwise manner.

In the case in which the temperature change pattern illustrated in Fig. 7 is used, a solution having the smallest single-objective function value in the entire iteration process may be obtained for each one of the Ising machines, for example, and one of the obtained solutions having the smallest single-objective function value among the Ising machines may be selected as an optimal solution. A solution obtained in each Ising machine each time a predetermined number of iterations (e.g., 1000 iterations) are performed may be used as an intermediate solution.

Referring to Fig. 3 again, after step S6, the procedure returns to step S3, from which the subsequent processes are repeated. Upon finding in step S3 that WeightPatternList is empty, i.e., that the optimization process is completed for all the weighting patterns, the process proceeds to step S7.

In step S7, the initial solution setting unit 40 of the multi-point search calculation unit 22 generates an initial solution set $S_{init}$. Specifically, the pareto-rank calculation unit 42 calculates pareto ranks for all the intermediate solutions belonging to the intermediate solution set $S_{samples}$. In the present embodiment, the pareto rank may be defined as follows:

Rank 1: all non-dominated solution in the solution set; and
Rank k: non-dominated solutions in the set obtained by removing the solutions of ranks 1 through k-1 from the solution set.

Further, the higher rank extracting unit 41 extracts intermediate solutions having relatively high pareto ranks among the intermediate solutions. The initial solution setting unit 40 stores the intermediate solutions extracted by the higher rank extracting unit 41 in the initial solution set $S_{init}$. In the processing that follows, a multi-point search is performed from the initial state comprised of the initial solutions stored in the initial solution set $S_{init}$.

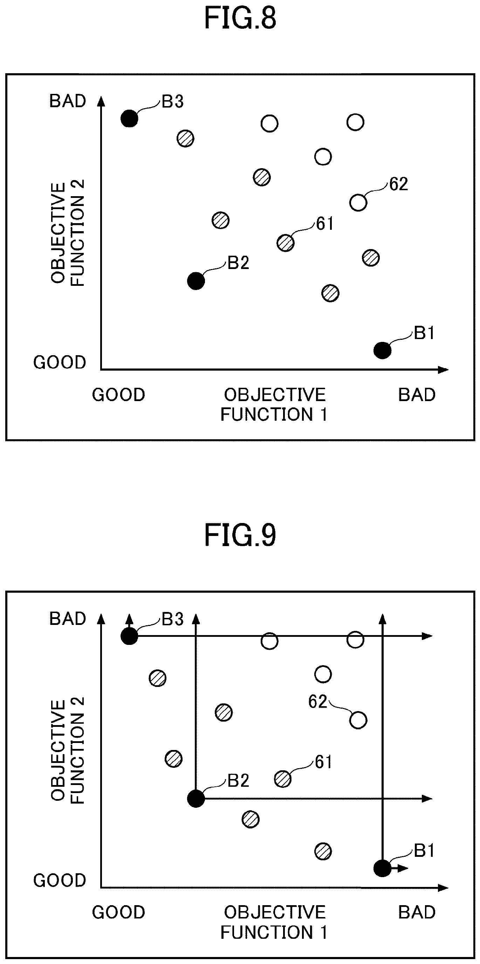

Fig. 8 is a drawing schematically illustrating a distribution of initial solutions. In Fig. 8, as in Fig. 4, the value of the first objective function $f_1(x)$ is represented by the horizontal axis, and the value of the second objective function $f_2(x)$ is represented by the vertical axis. The solutions B1 to B3 represented by solid circles are the optimal solutions illustrated in Fig. 4. Solutions 61 represented by diagonally hatched circles and solutions 62 represented by open circles (only one representative solution in each solution set is designated by a reference number) are intermediate solutions obtained by the Ising-machine execution unit 32. Among the solutions 61 and 62, those which have relatively high pareto ranks are the solutions 61. These solutions 61, for example, are used as the initial solutions subject to multi-point search.

Fig. 9 is a drawing schematically illustrating changes in the distribution of solutions obtained by a multi-point search. A multi-point search is performed with respect to the solutions 61 illustrated in Fig. 8. In doing so, solutions at least including non-dominated solutions are selected from the plurality of solutions present at one stage of iterations, and the selected non-dominated solutions are left to remain for the next stage again and again. As a result, solutions 61 as illustrated in Fig. 9 are obtained. Two arrows extending from each of the optimal solutions B1, B2, and B3 are illustrated and extend to the right and upward, respectively. Each of the optimal solutions B1, B2, and B3 dominates the solutions situated in the area situated between these two arrows (see the expressions (4) and (5)). Some of the solutions 61 are non-dominated solutions that are not interposed between these arrows, and, also, are situated in the vicinity of the pareto front PF (see Fig. 4) between the optimal solution B1 and the optimal solution B2 or between the optimal solution B2 and the optimal solution B3. In the following, a description will be given of a genetic algorithm that obtains such a diverse, satisfactory set of solutions.

In step S8, the multi-point search unit 43 of the multi-point search calculation unit 22 stores the intermediate solutions belonging to the initial solution set $S_{init}$ in the parent set $S_{parent}$.

In step S9, the multi-point search unit 43 checks whether the count value LoopCounter is smaller than LoopNum. In the case of the check result indicating "YES", the procedure proceeds to step S10.

In step S10, the multi-point search unit 43 generates new solutions by performing genetic operators such as crossover and mutation based on the elements stored in the parent set $S_{parent}$, followed by storing the generated solutions in a provisional solution set $S_{temp}$. In step S11, the multi-point search unit 43 acquires constraint satisfaction solutions situated near each element stored in the provisional solution set $S_{temp}$, followed by storing these constraint satisfaction solutions in the child set $S_{child}$. The processes performed in these steps S10 and S11 will be described in more detail below.

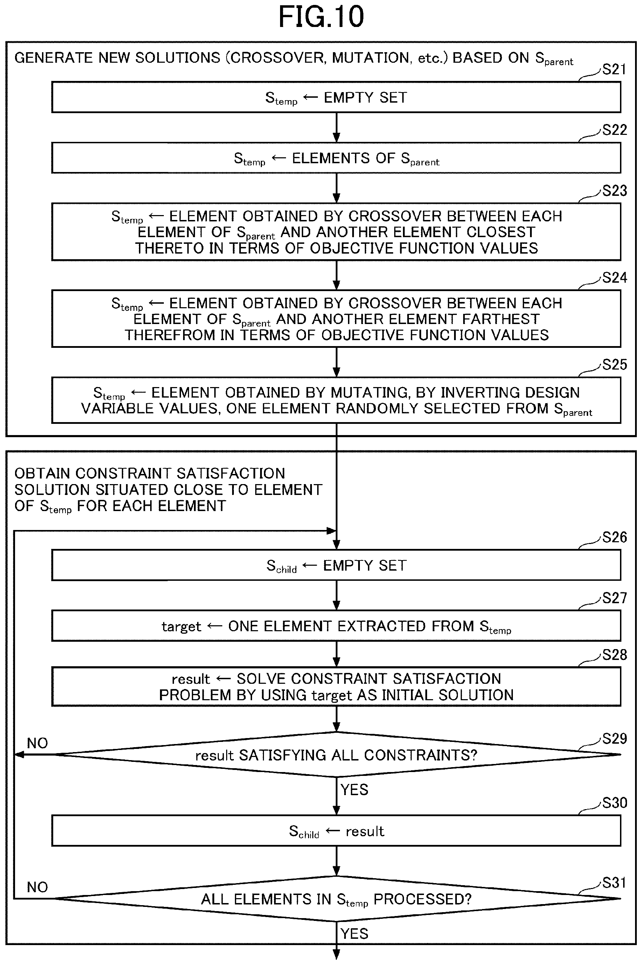

Fig. 10 is a flowchart illustrating the detail of the processes performed in steps S10 and S11 illustrated in Fig. 3. In Fig. 10, steps S21 through S25 correspond to the process in step S10, and steps S26 through S31 correspond to the processes in step S11.

In step S21, the multi-point search unit 43 prepares an empty set as the provisional solution set $S_{temp}$. In step S22, the multi-point search unit 43 stores the elements of the parent set $S_{parent}$ in the provisional solution set $S_{temp}$, without any change. This guarantees that the parents are also retained as part of the targets from which solutions to be left to remain in the next generation are to be selected, i.e., as candidates for the solutions that are left to remain in the next generation.

In step S23, the multi-point search unit 43 selects one element from the parent set $S_{parent}$, and also selects from the parent set $S_{parent}$ the closest element in terms of objective function values to the selected element, followed by performing crossover between these two elements to generate two new solutions. The multi-point search unit 43 adds these two new generated solutions to the provisional solution set $S_{temp}$. In this manner, the multi-point search unit 43 performs, with respect to all the elements belonging to the parent set $S_{parent}$, the process of selecting two elements from the parent set $S_{parent}$ to generate new solutions. In the present embodiment, the crossover operator is not limited to any specific type, and may be any one of one-point crossover, two-point crossover, multi-point crossover, uniform crossover, and the like. When identifying the closest element in terms of objective function values to a given element, it suffices to check the distance between two elements of interest by using the Euclidean distance or the like defined in the coordinates corresponding to the objective function values.

In step S24, the multi-point search unit 43 selects one element from the parent set $S_{parent}$, and also selects from the parent set $S_{parent}$ the farthest element in terms of objective function values from the selected element, followed by performing crossover between these two elements to generate two new solutions. The multi-point search unit 43 adds these two new generated solutions to the provisional solution set $S_{temp}$. In this manner, the multi-point search unit 43 performs, with respect to all the elements belonging to the parent set $S_{parent}$, the process of selecting two elements from the parent set $S_{parent}$ to generate new solutions.

In step S25, the multi-point search unit 43 randomly selects one element from the parent set $S_{parent}$, and generates a mutated solution by inverting the design variable values (i.e., $x_1$, $x_2$, $x_3$, ..., $x_n$ in the expression (1)) of this element, for example. The multi-point search unit 43 adds the generated mutated solution to the provisional solution set $S_{temp}$. The process of generating a mutation is not limited to this example. For example, a mutation may be created by replacing part of the design variable values with randomly generated values of 0 and 1.

In step S26, the multi-point search unit 43 prepares an empty set as the child set $S_{child}$. In step S27, the multi-point search unit 43 retrieves one element from the provisional solution set $S_{temp}$, followed by designating the retrieved element as "target". The retrieved elements is removed from the provisional solution set $S_{temp}$.

In step S28, the multi-point search unit 43 performs an approximate solution method to solve a constraint satisfaction problem by using "target" as the initial solution, thereby obtaining a constraint satisfaction solution or an approximate solution thereof situated near "target". The multi-point search unit 43 designates the obtained solution as "result". When "target" itself satisfies all the constraints, it suffices to use "target" as "result" without any change. The approximate solution algorithm is not limited to any particular one, and may be, for example, a greedy method, a local search method, a tabu search, or annealing.

In step S29, the multi-point search unit 43 checks whether "result" satisfies all the constraints. Upon finding that all the constraints are not satisfied, the procedure goes back to step S27 for repeating the subsequent steps. Upon finding that all the constraints are satisfied, the procedure proceeds to step S30.

In step S30, the multi-point search unit 43 adds "result" to the child set $S_{child}$. In step S31, the multi-point search unit 43 checks whether the above-described processes have been completed for all elements of the provisional solution set $S_{temp}$, i.e., whether the provisional solution set $S_{temp}$ has become empty. Upon finding that the check result indicates NO, the procedure goes back to step S27 to perform the subsequent steps. Upon finding that the check result indicates "YES", the procedure comes to an end.

When the processes of step S10 and step S11 in Fig. 3 are completed as described above, the pareto-rank calculation unit 42 in step S12 of Fig. 3 calculates pareto ranks for all the elements stored in the child set $S_{child}$, and, then, the higher rank extracting unit 41 extracts elements having relatively high calculated pareto ranks as solutions. The solutions to be extracted may only be elements that have pareto rank 1, or may only be elements that have pareto ranks 1 to K (K: integer greater than or equal to two). Thereafter, the multi-point search unit 43 overwrites the parent

set $S_{parent}$ with the extracted solutions having high parity ranks. This arrangement facilitates successive selection of solutions that properly move toward the convergence of solutions when selecting, from a plurality of solutions belonging to a given generation, solutions at least including non-dominated solutions for the plurality of objective functions to retain the selected solutions for the next generation.

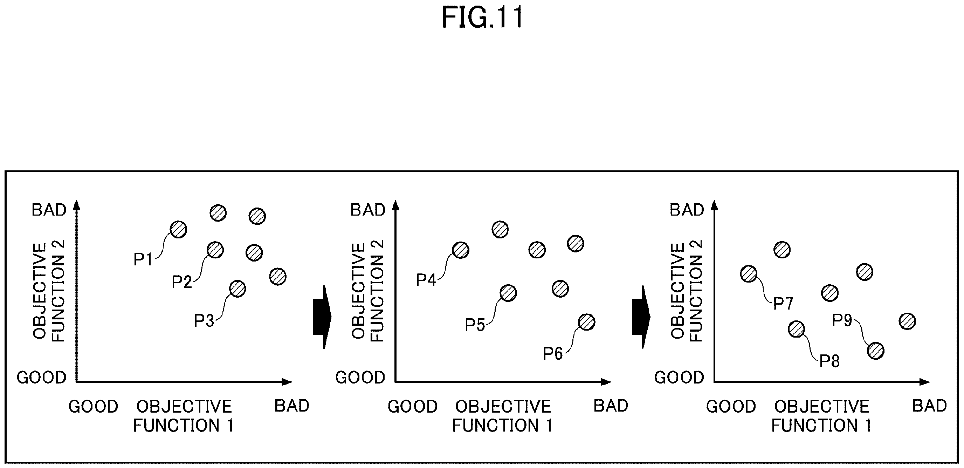

Fig. 11 is a diagram schematically illustrating how solutions are gradually optimized by retaining solutions having high pareto ranks for next generations. In Fig. 11, as in Fig. 4, the value of the first objective function $f_1(x)$ is represented by the horizontal axis, and the value of the second objective function $f_2(x)$ is represented by the vertical axis. Among the solutions in the child set $S_{child}$ obtained for a given generation, solutions P1 to P3 having pareto rank 1, for example, are retained in the parent set $S_{parent}$ for a next generation. Among the solutions in the child set $S_{child}$ obtained based on this parent set $S_{parent}$, solutions P4 to P6 having pareto rank 1, for example, are retained in the parent set $S_{parent}$ for a next generation. Among the solutions in the child set $S_{child}$ obtained based on this parent set $S_{parent}$, solutions P7 to P9 having pareto rank 1, for example, are retained in the parent set $S_{parent}$ for a next generation. Repeatedly performing this process causes solutions to be updated in each generation such that the solutions approach the pareto front (see Fig. 4) from generation to generation.

Returning to Fig. 3, the termination determining unit 44 in step S13 determines whether the parent set $S_{parent}$ for the next generation has converged to the pareto solutions (i.e., whether its elements can be regarded as pareto solutions or approximate solutions thereof) based on the parent set $S_{parent}$ and the optimal solution set $S_{best}$. Namely, the termination determining unit 44 makes a termination condition check to determine whether or not to terminate the genetic algorithm, based on comparison between the solutions stored in the parent set $S_{parent}$ and the solutions stored in the optimal solution set $S_{best}$.

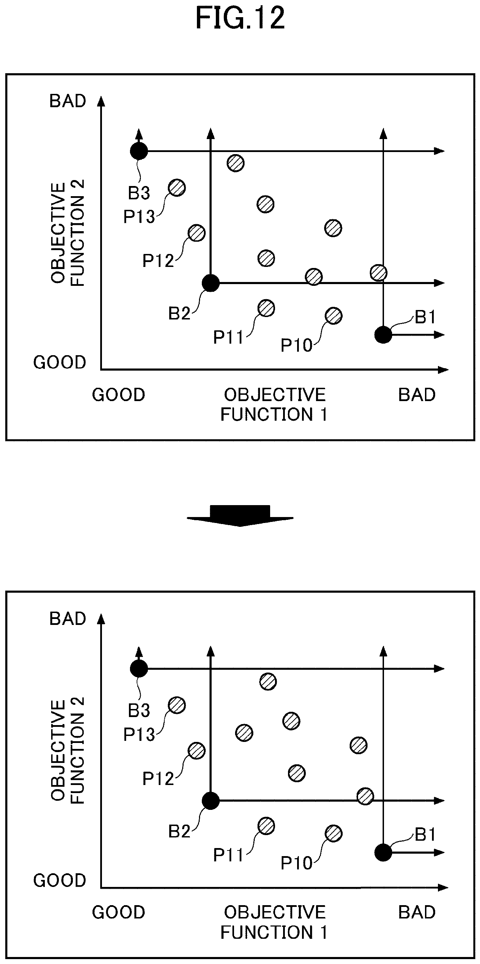

Fig. 12 is a drawing schematically illustrating an example of termination conditions for multi-point search. In Fig. 12, as in Fig. 4, the value of the first objective function $f_1(x)$ is represented by the horizontal axis, and the value of the second objective function $f_2(x)$ is represented by the vertical axis. The solutions B1 to B3 represented by solid circles are the optimal solutions illustrated in Fig. 4. The solutions represented by diagonally hatched circles are solutions belonging to the child set $S_{child}$ obtained in a certain generation by the genetic algorithm. As is illustrated in the upper graph of Fig. 12, among the solutions belonging to the child set $S_{child}$, solutions P10 to P13 having pareto rank 1, for example, are extracted in step S12 previously described to form a parent set $S_{parent}$ for a next generation. In the example illustrated in the upper graph of Fig. 12, the solutions P10 through P13 are also non-dominated solutions in the solution set that include the solutions (of the child set $S_{child}$) obtained in this generation and the optimal solutions B1 through B3. Namely, the optimal solutions B1 through B3 do not dominate (i.e., are not superior to) the solutions P10 through P13.

By performing the previously-described processes in steps S10 and S11 based on the solutions belonging to this parent set $S_{parent}$, the solutions as illustrated in the lower graph of Fig. 12 (i.e., diagonally hatched circles) are obtained and constitute the child set $S_{child}$. Among the solutions constituting this child set $S_{child}$, the solution having pareto rank 1 (i.e., non-dominated solutions) are P10 through P13, and are identical to the solutions P10 through P13 having pareto rank 1 in the previous generation illustrated in the upper graph. Namely, a non-dominated solution set in the solution set that include the solutions (of the child set $S_{child}$) obtained in a given generation and the optimal solutions B1 through B3 remains to be the same non-dominated solution set without any change in the next generation. In other words, a generation change did not produce more appropriate solutions.

As illustrated in Fig. 12, the termination determining unit 44 of the multi-point search calculation unit 22 may decide to terminate the multi-point search when the non-dominated solution set in the solution set that includes solutions obtained by the multi-point search and the optimal solutions has stopped changing in iteration. Such a termination condition check facilitates timely termination of the multi-point search when solutions having sufficiently satisfactory values that are not dominated even by the optimal solutions have sufficiently converged.

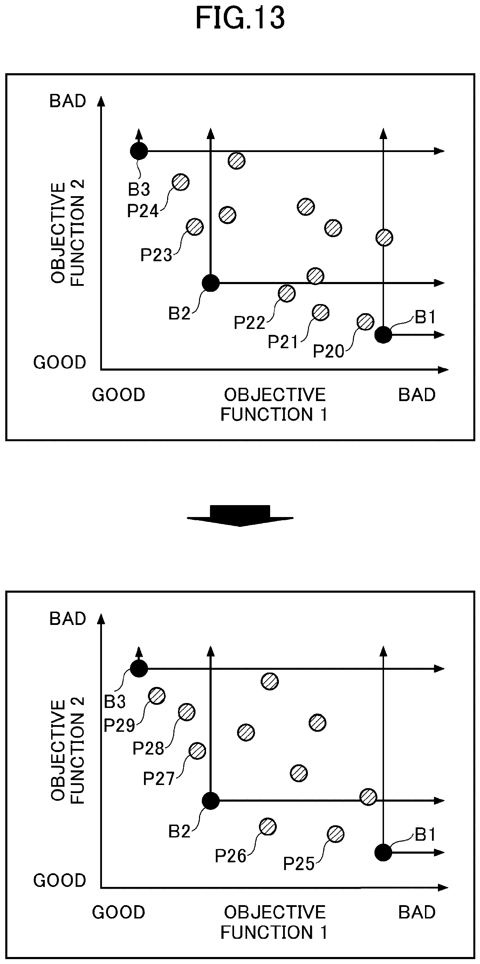

Fig. 13 is a drawing schematically illustrating another example of termination conditions for multi-point search. Methods of illustration in Fig. 13 are the same as in Fig. 12. As is illustrated in the upper graph of Fig. 13, among the solutions belonging to the child set $S_{child}$, solutions P20 to P24 having pareto rank 1, for example, are extracted in step S12 previously described to form a parent set $S_{parent}$ for a next generation. In the example illustrated in the upper graph of Fig. 13, the solutions P20 through P24 are also non-dominated solutions in the solution set that includes the solutions (of the child set $S_{child}$) obtained in this generation and the optimal solutions B1 through B3. Namely, the optimal solutions B1 through B3 do not dominate (i.e., are not superior to) the solutions P20 through P24.

By performing the previously-described processes in steps S10 and S11 based on the solutions belonging to this parent set $S_{parent}$, the solutions as illustrated in the lower graph of Fig. 13 (i.e., diagonally hatched circles) are obtained and constitute the child set $S_{child}$. Among the solutions constituting this child set $S_{child}$, the solution having pareto rank 1 (i.e., non-dominated solutions) are P25 through P29. The number of non-dominated solutions P25 through P29 is five, and the number of non-dominated solutions P20 through P24 in the previous generation is also five. Namely, the number of solutions belonging to a non-dominated solution set in the solution set that includes the solutions (i.e., the child set $S_{child}$) in a given generation and the optimal solutions B1 through B3 is the same between the given generation and the next generation. In other words, a generation change did not result in an increase in the number of proper solutions.

As illustrated in Fig. 13, the termination determining unit 44 of the multi-point search calculation unit 22 may decide to terminate the multi-point search when the number of non-dominated solutions in the solution set that includes solutions obtained by the multi-point search and the optimal solutions has stopped changing in iteration. Such a termination condition check facilitates timely termination of the multi-point search when a sufficient number of solutions having sufficiently satisfactory values and not dominated even by the optimal solutions has been produced.

Returning to Fig. 3, the multi-point search unit 43 in step S14 determines whether to terminate the procedure, based on the result of a termination condition check that is made by the termination determining unit 44 and that indicates whether solutions have converged to pareto solutions (or approximate solutions thereof). Upon finding that convergence to pareto solutions (or approximate solutions thereof) has not yet occurred, the procedure goes back to step S9 for repeating the subsequent processes. Upon finding that convergence to pareto solutions (or approximate solutions thereof) has occurred, the procedure proceeds to step S15. Also, upon finding in step S9 that the count value LoopCounter is not smaller than LoopNum, the procedure proceeds to step S15.

In step S15, the data output unit 23 outputs the parent set $S_{parent}$ and the optimal solution set $S_{best}$ as the solutions determined by the optimization algorithm. With this, the execution of the optimization method comes to an end.

Further, although the present invention has been described with reference to the embodiments, the present invention is not limited to these embodiments, and various variations and modifications may be made without departing from the scope as defined in the claims.

For example, the optimization method illustrated in Fig. 3 is configured such that genetic operators such as crossover and mutation are performed in step S10, and solutions satisfying constraints are found in step S11, but such a method is not intended to be limiting. For example, genetic operators such as crossover and mutation in step S10 may be adapted such that the constraints are not violated. Alternatively, genetic operators may be performed a large number of times in step S10, so that only those meeting the constraints are retained as solutions. In this case, the process of obtaining constraint satisfaction solutions in step S11 is not necessary.

According to at least one embodiment, a diverse set of solutions can be efficiently generated for a multi-objective optimization problem.

**Claims**

1. An apparatus, comprising:

   an annealing calculation unit configured to perform an annealing-based solution search for each of a plurality of single-objective functions so as to obtain first solutions produced by the solution search, the plurality of single-objective functions being each generated by a process of generating a single-objective function by adding together a plurality of objective functions after weighting the objective functions with a corresponding one of a plurality of weighting patterns; and
   a multi-point search calculation unit configured to obtain pareto solutions or approximate solutions thereof by performing a multi-point search from an initial state that is comprised of at least part of the first solutions, the multi-point search being performed such that solutions including at least non-dominated solutions of the plurality of objective functions are selected from a plurality of second solutions present in any given one of iterations of the multi-point search, and then the selected solutions are retained for a next one of the iterations.

2. The apparatus as claimed in claim 1, wherein the multi-point search calculation unit is configured to determine whether to terminate the multi-point search based on comparison between solutions obtained by the multi-point search and best solutions among the first solutions obtained by the solution search.

3. The apparatus as claimed in claim 1 or 2, wherein the annealing calculation unit is configured to generate at least part of the plurality of single-objective functions by repeatedly performing the process of generating a single-objective function for which one objective function is selected from the plurality of objective functions and for which a weight for the selected objective function is set to a non-zero value and weights for remaining objective functions are set to zero, the process being performed for each of the plurality of objective functions.

4. The apparatus as claimed in claim 3, wherein the annealing calculation unit is configured to generate at least part of the plurality of single-objective functions by repeatedly performing the process of generating a single-objective function for which a pair of two objective functions are selected from the plurality of objective functions and for which weights for the two selected objective functions are set to a non-zero value and weights for remaining objective functions are set to zero, the process being performed for each of all pairs selectable from the plurality of objective functions.

5. The apparatus as claimed in any one of claims 1 to 4, wherein the annealing calculation unit is configured to obtain the first solutions while changing a temperature setting of annealing.

6. The apparatus as claimed in any one of claims 1 to 5, wherein the multi-point search calculation unit is configured to select solutions having higher pareto ranks from the plurality of second solutions present in one of the iterations, and to retain the selected solutions for a next one of the iterations.

7. The apparatus as claimed in claim 2, wherein the multi-point search calculation unit is configured to terminate the multi-point search when a non-dominated solution set in a solution set that includes solutions obtained by the multi-point search and the best solutions has stopped changing in the iterations.

8. The apparatus as claimed in claim 2, wherein the multi-point search calculation unit is configured to terminate the multi-point search when a number of non-dominated solutions in a solution set that includes solutions obtained by the multi-point search and the best solutions has stopped changing in the iterations.

9. A method, comprising

generating a plurality of single-objective functions, the plurality of single-objective functions being each generated by a process of generating a single-objective function by adding together a plurality of objective functions after weighting the objective functions with a corresponding one of a plurality of weighting patterns;
performing an annealing-based solution search for each of the plurality of single-objective functions so as to obtain first solutions produced by the solution search; and
obtaining pareto solutions or approximate solutions thereof by performing a multi-point search from an initial state that is comprised of at least part of the first solutions, the multi-point search being performed such that solutions including at least non-dominated solutions of the plurality of objective functions are selected from a plurality of second solutions present in any given one of iterations of the multi-point search, and then the selected solutions are retained for a next one of the iterations.

10. A program comprising instructions which, when the program is executed by a computer, causes the computer to perform:

generating a plurality of single-objective functions, the plurality of single-objective functions being each generated by a process of generating a single-objective function by adding together a plurality of objective functions after weighting the objective functions with a corresponding one of a plurality of weighting patterns;
performing an annealing-based solution search for each of the plurality of single-objective functions so as to obtain first solutions produced by the solution search; and
obtaining pareto solutions or approximate solutions thereof by performing a multi-point search from an initial state that is comprised of at least part of the first solutions, the multi-point search being performed such that solutions including at least non-dominated solutions of the plurality of objective functions are selected from a plurality of second solutions present in any given one of iterations of the multi-point search, and then the selected solutions are retained for a next one of the iterations.

# FIG.1

EP 4 036 813 A1

## FIG.2

EP 4 036 813 A1

**FIG.3**

START

S1
LoopNum ← UPPER COUNT LIMIT OF MULTI-POINT SEARCH ITERATION LOOP
LoopCounter ← 0
WeightPatternList ← EMPTY ARRAY
$S_{best}$ ← EMPTY SET
$S_{sample}$ ← EMPTY SET
$S_{parent}$ ← EMPTY SET
$S_{child}$ ← EMPTY SET

S2
WeightPatternList ← GENERATED WEIGHTING PATTERNS

S3
WeightPatternList EMPTY? —YES→

NO

S4
WeightPattern ← WEIGHTING PATTERN RETRIEVED FROM TOP OF WeightPatternList

S5
F(x) ← SINGLE-OBJECTIVE FUNCTION CREATED ACCORDING TO WEIGHTING PATTERN STORED IN WeightPattern

S6
OPTIMIZE F(x) WHILE CHANGING TEMPERATURE SETTING OF ISING MACHINE
$S_{best}$ ← BEST SOLUTION WITH RESPECT TO F(x)
$S_{sample}$ ← INTERMEDIATE SOLUTIONS WITH RESPECT TO F(x)

S7
$S_{init}$ ← HIGHER PARETO RANK SOLUTIONS EXTRACTED FROM $S_{sample}$

S8
$S_{parent}$ ← $S_{init}$

S9
LoopCounter < LoopNum? —NO→

YES

S10
$S_{temp}$ ← NEW SOLUTIONS GENERATED (CROSSOVER, MUTATION, etc.) BASED ON $S_{parent}$

S11
$S_{child}$ ← CONSTRAINT SATISFACTION SOLUTION SITUATED CLOSE TO ELEMENT OF $S_{temp}$ FOR EACH ELEMENT

S12
$S_{parent}$ ← HIGHER PARETO RANK SOLUTIONS EXTRACTED FROM $S_{child}$

S13
CHECK WHETHER SOLUTIONS HAVE CONVERGED TO PARETO SOLUTIONS, BASED ON $S_{parent}$ AND $S_{best}$

S14
CONVERGED TO PARETO SOLUTIONS?
NO
YES

S15
OUTPUT $S_{parent}$ AND $S_{best}$

END

# FIG.4

# FIG.5

# FIG.6

ITERATION COUNT

# FIG.7

ITERATION COUNT

# FIG.8

# FIG.9

# FIG.10

GENERATE NEW SOLUTIONS (CROSSOVER, MUTATION, etc.) BASED ON $S_{parent}$ — S21

$S_{temp}$ ← EMPTY SET

S22

$S_{temp}$ ← ELEMENTS OF $S_{parent}$

S23

$S_{temp}$ ← ELEMENT OBTAINED BY CROSSOVER BETWEEN EACH ELEMENT OF $S_{parent}$ AND ANOTHER ELEMENT CLOSEST THERETO IN TERMS OF OBJECTIVE FUNCTION VALUES

S24

$S_{temp}$ ← ELEMENT OBTAINED BY CROSSOVER BETWEEN EACH ELEMENT OF $S_{parent}$ AND ANOTHER ELEMENT FARTHEST THEREFROM IN TERMS OF OBJECTIVE FUNCTION VALUES

S25

$S_{temp}$ ← ELEMENT OBTAINED BY MUTATING, BY INVERTING DESIGN VARIABLE VALUES, ONE ELEMENT RANDOMLY SELECTED FROM $S_{parent}$

OBTAIN CONSTRAINT SATISFACTION SOLUTION SITUATED CLOSE TO ELEMENT OF $S_{temp}$ FOR EACH ELEMENT

S26

$S_{child}$ ← EMPTY SET

S27

target ← ONE ELEMENT EXTRACTED FROM $S_{temp}$

S28

result ← SOLVE CONSTRAINT SATISFACTION PROBLEM BY USING target AS INITIAL SOLUTION

S29

NO ← result SATISFYING ALL CONSTRAINTS?

YES

S30

$S_{child}$ ← result

S31

NO ← ALL ELEMENTS IN $S_{temp}$ PROCESSED?

YES

FIG.11

# FIG.12

# FIG.13

Europäisches
Patentamt

European
Patent Office

Office européen
des brevets

# EUROPEAN SEARCH REPORT

Application Number

EP 21 21 2460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAI XINYE ET AL: "An adaptive memetic framework for multi-objective combinatorial optimization problems: studies on software next release and travelling salesman problems", SOFT COMPUTING, [Online] vol. 21, no. 9, 1 May 2017 (2017-05-01), pages 2215-2236, XP055923092, Berlin/Heidelberg ISSN: 1432-7643, DOI: 10.1007/s00500-015-1921-0 Retrieved from the Internet: URL:https://link.springer.com/content/pdf/10.1007/s00500-015-1921-0.pdf> [retrieved on 2022-05-19] * section 4 * | 1-10 | INV. G06N5/00 G06N3/12<br><br>ADD. G06N3/00 |
| A | SAO MASATAKA ET AL: "Application of Digital Annealer for Faster Combinatorial Optimization", FUJITSU SCIENTIFIC & TECHNICAL JOURNAL (ENGLISH VERSION), [Online] vol. 55, no. 2, 1 January 2019 (2019-01-01), pages 45-51, XP055652152, [retrieved on 2022-05-19] * abstract * | 1,9,10 | |

TECHNICAL FIELDS SEARCHED (IPC)

G06N

The present search report has been drawn up for all claims

| Place of search | Date of completion of the search | Examiner |
|---|---|---|
| The Hague | 20 May 2022 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 036 813 A1**

**Patent documents cited in the description**

- JP 2002302257 A

- JP H11143938 A